(19) Europäisches Patentamt / European Patent Office / Office européen des brevets

(11) **EP 3 917 232 A1**

(12) **EUROPEAN PATENT APPLICATION**
published in accordance with Art. 153(4) EPC

(43) Date of publication:
**01.12.2021 Bulletin 2021/48**

(51) Int Cl.:
***H04W 72/02*** (2009.01)

(21) Application number: **20746036.1**

(22) Date of filing: **22.01.2020**

(86) International application number:
**PCT/CN2020/073886**

(87) International publication number:
**WO 2020/151754 (30.07.2020 Gazette 2020/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2019 CN 201910069184**

(71) Applicant: **Huawei Technologies Co., Ltd.**
**Shenzhen, Guangdong 518129 (CN)**

(72) Inventors:
• **WU, Ji**
 **Shenzhen, Guangdong 518129 (CN)**
• **ZHANG, Jiayin**
 **Shenzhen, Guangdong 518129 (CN)**
• **JIA, Qiong**
 **Shenzhen, Guangdong 518129 (CN)**

(74) Representative: **Roth, Sebastian**
 **Mitscherlich PartmbB**
 **Patent- und Rechtsanwälte**
 **Sonnenstraße 33**
 **80331 München (DE)**

(54) **RA-RNTI PROCESSING METHOD AND APPARATUS**

(57) In a RA-RNTI processing method, after an LBT success, NR-U UE randomly selects a preamble preamble, and selects an available random access time-frequency resource RO; sends the preamble on the selected RO; and generates a RA-RNTI based on the RO. Specifically, a first indicator sent by a network apparatus may be received, where the first indicator is used to indicate time information or position information of a RAR; and the NR-U UE detects a PDCCH only within a time window (the RAR) indicated by the first indicator, where the PDCCH is scrambled by the gNB by using a same RA-RNTI.

FIG. 5

**Description**

This application claims priority to Chinese Patent Application No. 201910069184.X, filed with the Chinese Patent Office on January 24, 2019 and entitled "RA-RNTI PROCESSING METHOD AND APPARATUS", which is incorporated herein by reference in its entirety.

**TECHNICAL FIELD**

This application relates to the field of wireless communications technologies, and in particular, to a RA-RNTI processing method and apparatus.

**BACKGROUND**

After a cell search procedure, UE already achieves downlink synchronization with a cell. Therefore, the UE can receive downlink data. However, the UE can perform uplink transmission only after achieving uplink synchronization with the cell. The UE establishes a connection to the cell through a random access procedure (Random Access Procedure), and achieves the uplink synchronization.

Main purposes of random access are: (1) to achieve the uplink synchronization; and (2) to allocate a unique identifier C-RNTI in the cell to the UE.

There are two different random access procedures: a contention-based (Contention based) random access procedure and a non-contention-based (Non-Contention based, Contention-Free based) random access procedure. For contention-based random access, an entire procedure includes four steps. For non-contention-based random access, an entire procedure includes two steps. A RA-RNTI (random access network identifier) is a unique identifier of the UE that is used in the contention-based random access procedure.

In an LTE system, calculation of the RA-RNTI is related to a time-frequency resource used by the UE to send a preamble sequence, and a generation formula is as follows:

$$RA\text{-}RNTI = 1 + t\_id + 10 * f\_id \quad (1)$$

t_id indicates a number of the first subframe occupied for sending a preamble, and has a value range of $0 \leq t\_id < 10$. f_id indicates a number of a preamble transmission resource in frequency domain, and has a value range of $0 \leq t\_id < 6$. In conclusion, a value of the RA-RNTI is not repeated within a window of 10 ms (that is, within 10 subframes).

Similarly, in an NR system, a calculation formula of the RA-RNTI is as follows:

$$RA\text{-}RNTI = 1 + s\_id + 14 \times t\_id + 14 \times 80 \times f\_id + 14 \times 80 \times 8 \times ul\_carrier\_id \quad (2)$$

s_id indicates a number of a start symbol of the first subframe occupied for sending a preamble, and has a value range of $0 \leq s\_id < 14$. t_id indicates a number of the first subframe occupied by a preamble transmission resource, and has a value range of $0 \leq t\_id < 80$. f_id indicates a number of a preamble transmission resource in frequency domain, and has a value range of $0 \leq f\_id < 8$. ulcarrier id indicates an uplink carrier used for preamble transmission, '0' indicates a normal uplink carrier, and '1' indicates a supplementary uplink carrier. A reason for a difference from the value in the LTE system is that a time-frequency resource for NR PRACH transmission may theoretically start from each symbol in each slot in each system frame of each uplink carrier, and PRACH transmission supports a maximum subcarrier spacing of 120 kHz.

In conclusion, it can be ensured that the value of the NR RA-RNTI that is calculated according to the foregoing formula is not repeated only within a window of 10 ms (that is, within 10 subframes).

**SUMMARY**

A technical problem to be resolved in this application is to reduce repetition of a RA-RNTI in an unlicensed spectrum in an NR system.

In a RA-RNTI processing method, after an LBT success, NR-U UE randomly selects a preamble preamble, and selects an available random access time-frequency resource RO; sends the preamble on the selected RO; and generates a RA-RNTI based on the RO.

Preferably, a first indicator sent by a network apparatus may be received, where the first indicator is used to indicate time information or position information of a RAR; and the NR-U UE detects a PDCCH only within a time window (the RAR) indicated by the first indicator, where the PDCCH is scrambled by the gNB by using a same RA-RNTI. The first indicator is carried in DCI. Alternatively, the first indicator is carried in a RAR MAC CE. Various methods may be used to generate the RA-RNTI based on the RO, for example, the RA-RNTI is generated according to one of the following formulas:

$$RA\text{-}RNTI = 1 + s\_id + 14 \times t\_id + 14 \times K \times f\_id + 14 \times K \times 8 \times ul\_carrier\_id \ (3)$$

where in the foregoing formula, s_id indicates a number of a start symbol of the first subframe occupied for sending a preamble, and has a value range of $0 \leq s\_id < 14$; t_id indicates a number of the first subframe occupied by a preamble transmission resource, and has a value range of $0 \leq t\_id < 80$; f_id indicates a number of a preamble transmission resource in frequency domain, and has a value range of $0 \leq f\ id < 8$; ul_carrier_id indicates an uplink carrier used for preamble transmission, '0' indicates a normal uplink carrier, and '1' indicates a supplementary uplink carrier; and K is a parameter corresponding to a maximum value of the RAR window; or

$$RA\text{-}RNTI = 1 + s\_id + 14 \times t\_id + 14 \times 80 \times f\_id + 14 \times 80 \times 8 \times ul\_carrier\_id \ (2a)$$

where functions of parameters such as s_id, t_id, and f_id in the NR RA-RNTI calculation formula (2a) are the same as those in a formula (2); s_id is used to indicate a number of a start symbol of the first subframe occupied for sending a preamble, and has a value range of $0 \leq s\_id < 14$; t_id is used to indicate a number of the first subframe occupied by a preamble transmission resource, and has a value range of $0 \leq t\_id < 80$; f_id indicates a number of a preamble transmission resource in frequency domain, and has a value range of $0 \leq f\_id < 8$; but ul_carrier_id indication information in the NR RA-RNTI calculation formula (2a) is used to indicate position information of a preamble received by the gNB within the RAR window. Certainly, the formula (2), a formula (3a), a formula (3b), or the like mentioned in implementations may alternatively be used, and details are not described herein.

In another example, all system frames may be grouped into N groups according to a uniform distribution rule, RAR detection is performed only in a RAR corresponding to one group of system frames, RAR detection does not need to be performed in another group of system frames, and N is an integer greater than or equal to 2. Alternatively, in some other examples, the selecting an available random access time-frequency resource RO is specifically: selecting one subframe from a plurality of subframes in a system frame configured for the NRU UE, and sending the preamble in the selected subframe, where a quantity of the plurality of subframes is less than 10.

According to another aspect, a RA-RNTI processing method on a network side apparatus is provided. Details are not described herein.

According to other aspects, this application further provides an apparatus, a computer-readable storage medium, and the like that can perform the foregoing methods.

During implementation of embodiments of this application, scheduling of uplink resources can be more flexible for use of an unlicensed frequency band while an OCB requirement of ESTI is met. Further, resource utilization can be improved.

**BRIEF DESCRIPTION OF DRAWINGS**

To describe the technical solutions in embodiments of this application or in the background more clearly, the following describes the accompanying drawings for describing the embodiments of this application or the background.

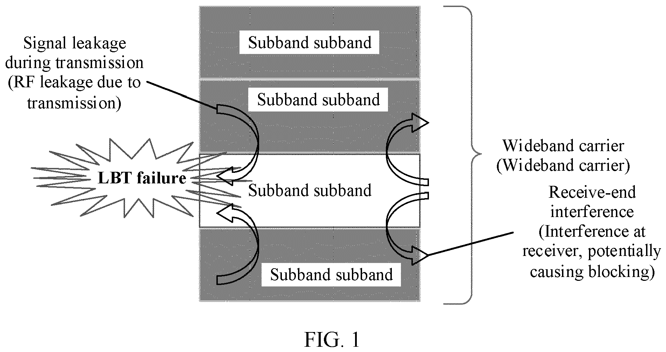

FIG. 1 is a schematic diagram of an existing resource allocation manner according to this application;
FIG. 2 is a schematic architectural diagram of a wireless communications system according to this application;
FIG. 3 is a schematic diagram of a hardware architecture of a terminal according to an embodiment of this application;
FIG. 4 is a schematic diagram of a hardware architecture of a base station according to an embodiment of this application;
FIG. 5 is a schematic flowchart of a random access procedure of NR-U UE according to an embodiment of this application;
FIG. 6 is a simple schematic diagram of NRU RAR MAC according to an embodiment of this application;
FIG. 7 is a schematic diagram of an NRU SF indication subframe header according to an embodiment of this application; and
FIG. 8 is a schematic diagram of NRU RA-RNTI detection according to an embodiment of this application.

## DESCRIPTION OF EMBODIMENTS

Terms used in implementations of this application are merely intended to explain specific embodiments of this application, and are not intended to limit this application.

For ease of subsequent description, for acronyms and abbreviations and key terms in this specification, refer to the following table:

| English acronyms and abbreviations | Full English expression/ Standard English term | Chinese expression/Chinese term |
|---|---|---|
| LTE | Long Term Evolution | Long term evolution |
| Paging | Paging | Paging |
| eNB | eNodeB | LTE base station |
| gNB | gNodeB | NR base station |
| UE | User Equipment | User |
| RRC | Radio Resource control | Radio resource control |
| IMSI | International Mobile Subscriber Identity | International mobile subscriber identity |
| BFT | Beamforming training | Beamforming training |
| DCI | Downlink control information | Downlink control information |
| BPL | Beam Pair Link | Beam link |
| RA | Random Access | Random access |
| C-RNTI | Cell Radio Network Temporary Identifier | Cell radio network temporary identifier |
| RA-RNTI | Random access Radio Network Temporary Identifier | Random access network temporary identifier |
| SS Burst Set | SS Burst Set | Synchronization signal burst set |
| Beam | Beam | Beam |
| NR | New Radio | 5G, next-generation cellular wireless communications system |
| PDCCH | Physical downlink control channel | Downlink control channel |
| SS/PBCH BLOCK | Synchronization signal/PBCH block | Synchronization signal block |
| BCH | Broadcast channel | Broadcast channel |
| PBCH | Physical broadcast channel | Physical broadcast channel |
| RMSI | Remaining minimum system information | Remaining minimum system information |
| OSI | Other system information | Other system information |
| CORESET | Control resource set | Control resource block |
| DCI | Downlink control information | Downlink control information |
| PDSCH | Physical downlink shared channel | Physical downlink shared channel |

(continued)

| English acronyms and abbreviations | Full English expression/ Standard English term | Chinese expression/Chinese term |
| --- | --- | --- |
| DMRS | Demodulation reference signal | Demodulation reference signal |
| RACH | Random Access Channel | Random access channel |
| PRACH | Physical Random Access Channel | Physical random access channel |
| RB | Resource block | Resource block |
| Interlace | Interlace | Interlacing frequency domain resource blocks |

For ease of understanding implementation of this application, a wireless communications system in the embodiments of this application is first described.

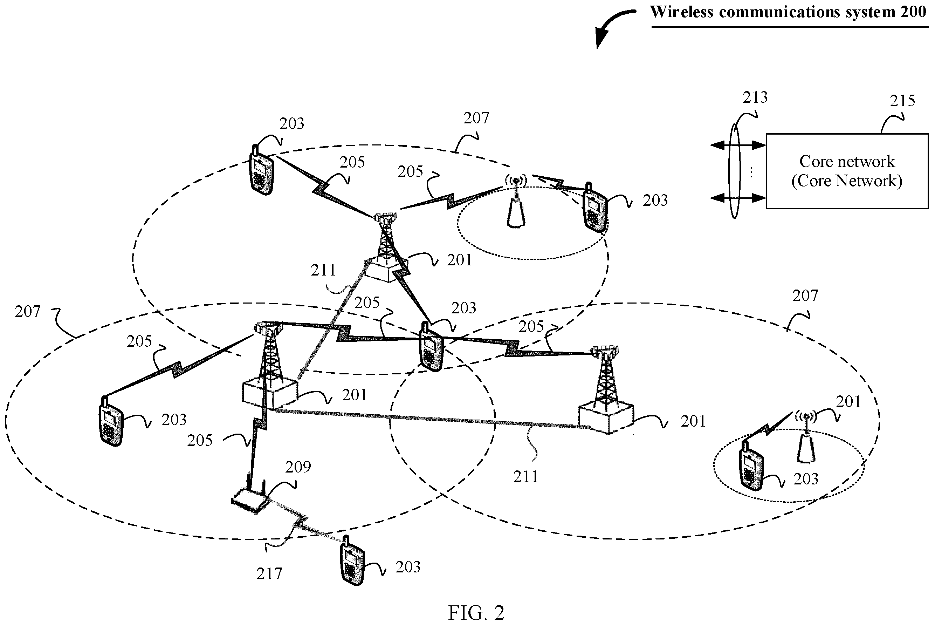

FIG. 2 shows a wireless communications system 200 in this application. The wireless communications system 200 may operate on a licensed frequency band or an unlicensed frequency band. It may be understood that use of the unlicensed frequency band can improve a system capacity of the wireless communications system 200. As shown in FIG. 2, the wireless communications system 200 includes one or more network devices 201, for example, a base station, a NodeB, an eNodeB, a WLAN access point, a wireless relay node, a wireless backhaul node, one or more terminals (Terminal) 203, and a core network 215.

The network device 201 may be configured to communicate with the terminal 203 under control of a base station controller (not shown). In some embodiments, the base station controller may be a part of the core network 230 or may be integrated into the base station 201.

The network device 201 may be configured to transmit control information (control information) or user data (user data) to the core network 215 through a backhaul (backhaul) interface (for example, an S1 interface) 213.

The network device 201 may perform wireless communication with the terminal 203 by using one or more base station antennas. Each base station 201 may provide communication coverage for a coverage area 207 corresponding to the base station 201. A coverage area 207 corresponding to an access point may be divided into a plurality of sectors (sector), and one sector corresponds to a part of the coverage area (not shown).

The network device 201 may also directly or indirectly communicate with the base station 201 through a backhaul (backhaul) link 211. The backhaul link 211 herein may be a wired communication connection or a wireless communication connection.

The network device 201 may alternatively be a radio controller in a cloud radio access network (cloud radio access network, CRAN) scenario. The network device 201 may alternatively be a network device in a 5G network, a network device in a future evolved network, a wearable device, a vehicle-mounted device, or the like. The network device 201 may alternatively be a small cell, a transmission reception point (transmission reference point, TRP), or the like. Certainly, this application is not limited thereto.

In some embodiments of this application, the network device 201 may include a base transceiver station (Base Transceiver Station), a wireless transceiver, a basic service set (Basic Service Set, BSS), an extended service set (Extended Service Set, ESS), a NodeB, an eNodeB, or the like. The wireless communications system 200 may include several different types of base stations 201, for example, a macro base station (macro base station) and a micro base station (micro base station). The base station 201 may use different radio technologies, for example, a cell radio access technology or a WLAN radio access technology.

The terminals 203 may be distributed in the entire wireless communications system 200, and may be stationary or moving. The terminal may be deployed on land, including an indoor terminal, an outdoor terminal, a handheld terminal, a wearable terminal, or a vehicle-mounted terminal; or may be deployed on a water surface (for example, on a steamboat); or may be deployed in the air (for example, on a plane, a balloon, or a satellite). The terminal device may be a mobile phone (mobile phone), a tablet computer (Pad), a computer having a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. The terminal device may sometimes be referred to as user equipment (user equipment, UE), an access terminal device, a UE unit, a UE station, a mobile station, a mobile console, a remote station, a remote terminal device, a mobile device, a UE terminal device, a terminal device, a wireless communications device, a UE agent, a UE apparatus, or the like. In some embodiments of this application, the terminal 203 may include a mobile device, a mobile station (mobile station), a mobile unit (mobile unit), a radio unit, a remote unit, a user agent, a mobile client, or the like.

In the embodiments of this application, the wireless communications system 200 may be an LTE communications system, for example, an LTE-U communications system, capable of operating on an unlicensed frequency band, or may be a 5G communications system or a future new radio communications system, for example, an NR-U communications system, capable of operating on an unlicensed frequency band. The wireless communications system 200 may use a licensed-assisted access (LAA) solution to process terminal access on the unlicensed frequency band. In the LAA solution, a primary cell (Primary Cell) operates on a licensed frequency band to transfer key messages and services that require quality of service assurance, and a secondary cell (Secondary Cell) operates on an unlicensed frequency band to improve data plane performance.

In the embodiments of this application, the wireless communications system 200 can support multi-carrier (multi-carrier) (waveform signals at different frequencies) operations. A multi-carrier transmitter can simultaneously transmit modulated signals on a plurality of carriers. For example, each communication connection 205 can carry multi-carrier signals modulated by using different radio technologies. Each modulated signal may be sent on different carriers, or may carry control information (for example, a reference signal or a control channel), overhead information (Overhead Information), data, and the like.

In addition, the wireless communications system 200 may further include a Wi-Fi network. To ensure that both an operator network and a Wi-Fi network (operating in an unlicensed spectrum) can function, the wireless communications system 200 may use a listen before talk (Listen before Talk, LBT) mechanism. For example, in the wireless communications system 200, some terminals 203 may be connected to a Wi-Fi access point 209 through Wi-Fi communication connections 217, to use unlicensed spectrum resources, and some terminals 203 may be connected to the base station 201 through mobile communication connections 205, to use unlicensed spectrum resources. Before using an unlicensed frequency band, any device needs to listen first, to detect whether the frequency band is occupied, and can occupy the frequency band to perform data transmission only if the frequency band is idle.

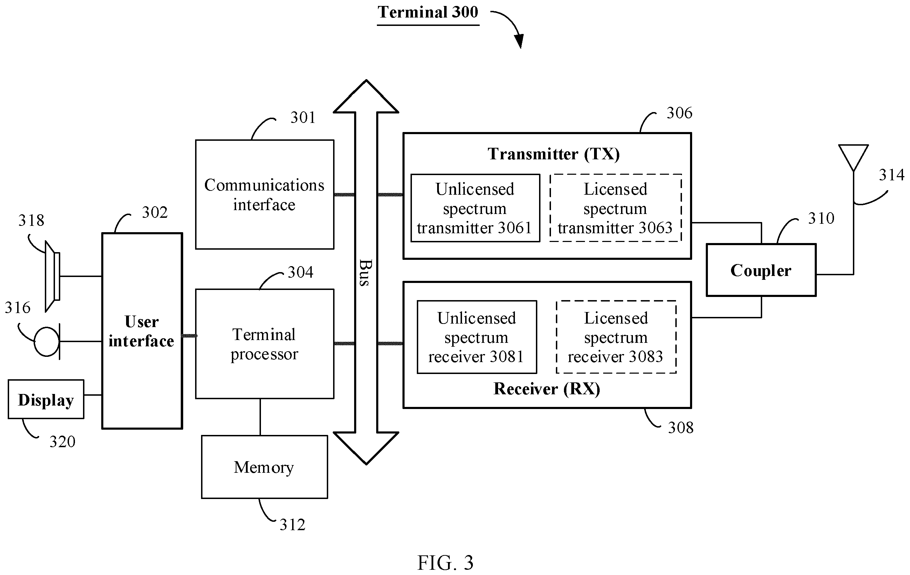

FIG. 3 shows a terminal 300 according to some embodiments of this application. As shown in FIG. 3, the terminal 300 may include input/output modules (including an audio input/output module 318, a key input module 316, a display 320, and the like), a user interface 302, one or more terminal processors 304, a transmitter 306, a receiver 308, a coupler 310, an antenna 314, and a memory 312. These components may be connected by using a bus or in another manner. In FIG. 3, an example in which a bus is used for connection is used.

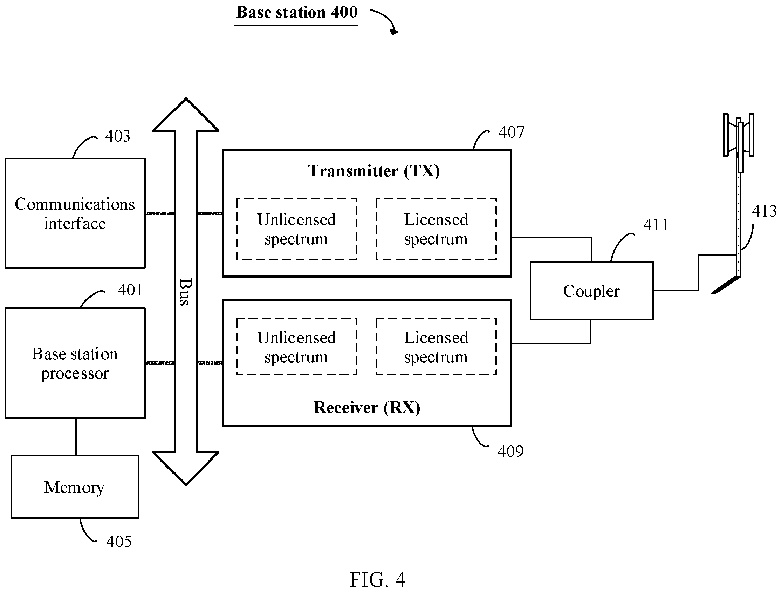

A communications interface 301 may be used by the terminal 300 to communicate with another communications device, for example, a base station. Specifically, the another communications device may be a base station 400 shown in FIG. 4. Specifically, the communications interface 301 may include one or more of a global system for mobile communications (Global System for Mobile Communication, GSM) (2G) communications interface, a wideband code division multiple access (Wideband Code Division Multiple Access, WCDMA) (3G) communications interface, a long term evolution (Long Term Evolution, LTE) (4G) communications interface, or the like, or may be a 4.5G, 5G, or future new radio communications interface. In addition to a wireless communications interface, the terminal 300 may be further equipped with a wired communications interface 301, for example, a local access network (Local Access Network, LAN) interface.

The antenna 314 may be configured to convert electromagnetic energy in a transmission line into an electromagnetic wave in free space, or convert an electromagnetic wave in free space into electromagnetic energy in a transmission line. The coupler 310 is configured to: divide a mobile communication signal received by the antenna 314 into a plurality of signals, and allocate the plurality of signals to a plurality of receivers 308.

The transmitter 306 may be configured to perform transmission processing on a signal output by the terminal processor 304, for example, modulate the signal on a licensed frequency band, or modulate the signal on an unlicensed frequency band. In some embodiments of this application, the transmitter 206 may include an unlicensed spectrum transmitter 3061 and a licensed spectrum transmitter 3063. The unlicensed spectrum transmitter 3061 may support the terminal 300 in transmitting signals in one or more unlicensed spectrums, and the licensed spectrum transmitter 3063 may support the terminal 300 in transmitting signals in one or more licensed spectrums.

The receiver 308 may be configured to perform receiving processing on the mobile communication signal received by the antenna 314. For example, the receiver 308 may demodulate a received signal that has been modulated on an unlicensed frequency band, or demodulate a received signal that has been modulated on a licensed frequency band. In some embodiments of this application, the receiver 308 may include an unlicensed spectrum receiver 3081 and a licensed spectrum receiver 3083. The unlicensed spectrum receiver 3081 may support the terminal 300 in receiving a signal that is modulated in an unlicensed spectrum, and the licensed spectrum receiver 3083 may support the terminal 300 in receiving a signal that is modulated in a licensed spectrum

In some embodiments of this application, the transmitter 306 and the receiver 308 may be considered as a wireless modem. In the terminal 300, there may be one or more transmitters 306 and one or more receivers 308.

In addition to the transmitter 306 and the receiver 308 shown in FIG. 3, the terminal 300 may further include other communications components, for example, a GPS module, a Bluetooth (Bluetooth) module, and a wireless fidelity (Wireless Fidelity, Wi-Fi) module. In addition to the wireless communication signal described above, the terminal 300 may further support another wireless communication signal, for example, a satellite signal or a shortwave signal. In addition to wireless communication, the terminal 300 may be further equipped with a wired network interface (for example, a LAN interface) to support wired communication.

The input/output modules may be configured to implement interaction between the terminal 300 and a user or an external environment, and may mainly include the audio input/output module 318, the key input module 316, the display 320, and the like. Specifically, the input/output modules may further include a camera, a touchscreen, a sensor, and the like. The input/output modules all communicate with the terminal processor 304 through the user interface 302.

The memory 312 is coupled to the terminal processor 304, and is configured to store various software programs and/or a plurality of sets of instructions. Specifically, the memory 312 may include a high-speed random access memory, and may also include a non-volatile memory, for example, one or more magnetic disk storage devices, a flash memory device, or another non-volatile solid-state storage device. The memory 312 may store an operating system (referred to as a system for short below), for example, an embedded operating system such as Android, iOS, Windows, or Linux. The memory 312 may further store a network communications program. The network communications program may be used to communicate with one or more additional devices, one or more terminal devices, and one or more network devices. The memory 312 may further store a user interface program. The user interface program may use a graphical operation interface to vividly display content of an application program, and use input controls such as menus, dialog boxes, and keys to receive control operations of a user on the application program.

In some embodiments of this application, the memory 312 may be configured to store a program for implementing, on a terminal 300 side, a resource allocation method provided in one or more embodiments of this application. For implementation of the resource allocation method provided in the one or more embodiments of this application, refer to subsequent embodiments.

The terminal processor 304 may be configured to read and execute computer-readable instructions. Specifically, the terminal processor 304 may be configured to: invoke the program stored in the memory 312, for example, the program for implementing, on the terminal 300 side, the resource allocation method provided in the one or more embodiments of this application, and execute instructions included in the program.

It may be understood that the terminal 300 may be the terminal 203 in the wireless communications system 200 shown in FIG. 2, and may be implemented as a mobile device, a mobile station (mobile station), a mobile unit (mobile unit), a radio unit, a remote unit, a user agent, a mobile client, or the like.

It should be noted that the terminal 300 shown in FIG. 3 is merely an implementation of the embodiments of this application. During actual application, the terminal 300 may alternatively include more or fewer components. This is not limited herein.

FIG. 4 shows a base station 400 according to some embodiments of this application. As shown in FIG. 4, the base station 400 may include a communications interface 403, one or more base station processors 401, a transmitter 407, a receiver 409, a coupler 411, an antenna 413, and a memory 405. These components may be connected by using a bus or in another manner. In FIG. 4, an example in which a bus is used for connection is used.

The communications interface 403 may be used by the base station 400 to communicate with another communications device, for example, a terminal device or another base station. Specifically, the terminal device may be the terminal 300 shown in FIG. 3. Specifically, the communications interface 403 may include one or more of a global system for mobile communications (GSM) (2G) communications interface, a wideband code division multiple access (WCDMA) (3G) communications interface, a long term evolution (LTE) (4G) communications interface, or the like, or may be a 4.5G, 5G, or future new radio communications interface. In addition to a wireless communications interface, the base station 400 may be further equipped with a wired communications interface 403 to support wired communication. For example, a backhaul link between one base station 400 and another base station 400 may be a wired communication connection.

The antenna 413 may be configured to convert electromagnetic energy in a transmission line into an electromagnetic wave in free space, or convert an electromagnetic wave in free space into electromagnetic energy in a transmission line. The coupler 411 may be configured to: divide a mobile communication signal into a plurality of signals, and allocate the plurality of signals to a plurality of receivers 409.

The transmitter 407 may be configured to perform transmission processing on a signal output by the base station processor 401, for example, modulate the signal on a licensed frequency band, or modulate the signal on an unlicensed frequency band. In some embodiments of this application, the transmitter 407 may include an unlicensed spectrum transmitter 4071 and a licensed spectrum transmitter 4073. The unlicensed spectrum transmitter 4071 may support the base station 400 in transmitting signals in one or more unlicensed spectrums, and the licensed spectrum transmitter 4073 may support the base station 400 in transmitting signals in one or more licensed spectrums.

The receiver 409 may be configured to perform receiving processing on the mobile communication signal received by the antenna 413. For example, the receiver 409 may demodulate a received signal that has been modulated on an unlicensed frequency band, or demodulate a received signal that has been modulated on a licensed frequency band. In some embodiments of this application, the receiver 409 may include an unlicensed spectrum receiver 4091 and a licensed spectrum receiver 4093. The unlicensed spectrum receiver 4091 may support the base station 400 in receiving a signal that is modulated in an unlicensed spectrum, and the licensed spectrum receiver 4093 may support the base station 400 in receiving a signal that is modulated in a licensed spectrum.

In some embodiments of this application, the transmitter 407 and the receiver 409 may be considered as a wireless modem. In the base station 400, there may be one or more transmitters 407 and one or more receivers 409.

The memory 405 is coupled to the base station processor 401, and is configured to store various software programs and/or a plurality of sets of instructions. Specifically, the memory 405 may include a high-speed random access memory, and may also include a non-volatile memory, for example, one or more magnetic disk storage devices, a flash memory device, or another non-volatile solid-state storage device. The memory 405 may store an operating system (referred to as a system for short below), for example, an embedded operating system such as uCOS, VxWorks, or RTLinux. The memory 405 may further store a network communications program. The network communications program may be used to communicate with one or more additional devices, one or more terminal devices, and one or more network devices.

The base station processor 401 may be configured to: manage a radio channel, make a call, establish or remove a communications link, control cross-region handover of user equipment in a local control region, and so on. Specifically, the base station processor 401 may include: an administration module/communication module (Administration Module/Communication Module, AM/CM) (a center for speech channel switching and information exchange), a basic module (Basic Module, BM) (configured to implement call processing, signaling processing, radio resource management, radio link management, and circuit maintenance functions), a transcoder and sub-multiplexer (Transcoder and SubMultiplexer, TCSM) (configured to implement multiplexing/demultiplexing and transcoding functions), and the like.

In the embodiments of this application, the base station processor 401 may be configured to read and execute computer-readable instructions. Specifically, the base station processor 401 may be configured to: invoke the program stored in the memory 405, for example, a program for implementing, on a base station 400 side, a resource allocation method provided in one or more embodiments of this application, and execute instructions included in the program.

It may be understood that the base station 400 may be the base station 201 in the wireless communications system 200 shown in FIG. 2, and may be implemented as a base transceiver station, a wireless transceiver, a basic service set (BSS), an extended service set (ESS), a NodeB, an eNodeB, or the like. The base station 400 may be implemented as several different types of base stations, for example, a macro base station and a micro base station. The base station 400 may use different radio technologies, for example, a cell radio access technology or a WLAN radio access technology.

It should be noted that the base station 400 shown in FIG. 4 is merely an implementation of the embodiments of this application. During actual application, the base station 400 may alternatively include more or fewer components. This is not limited herein.

Alternatively, the terminal 300 or the base station 400 may be configured as a universal processing system. For example, the universal processing system is usually referred to as a chip. The universal processing system includes one or more microprocessors that provide a processor function, and an external memory that provides at least a part of the storage medium. All these components are connected to other supporting circuits by using an external bus architecture.

Alternatively, the terminal 300 or the base station 400 may be implemented by using an ASIC (application-specific integrated circuit) that includes the processor, the bus interface, and the user interface, and at least a part that is of the storage medium and that is integrated into a single chip. Alternatively, the terminal 300 or the base station 400 may be implemented by using one or more FPGAs (field programmable gate arrays), a PLD (programmable logic device), a controller, a state machine, gate logic, a discrete hardware component, any other appropriate circuit, or any combination of circuits that can perform various functions described throughout the present invention. The processor is responsible for managing the bus and general processing (including executing software stored in the storage medium). The processor may be implemented by using one or more general-purpose processors and/or dedicated processors. For example, the processor includes a microprocessor, a microcontroller, a DSP processor, and another circuit that can execute software. The software should be broadly construed as representing an instruction, data, or any combination thereof, regardless of whether it is referred to as software, firmware, middleware, microcode, a hardware description language, or the like.

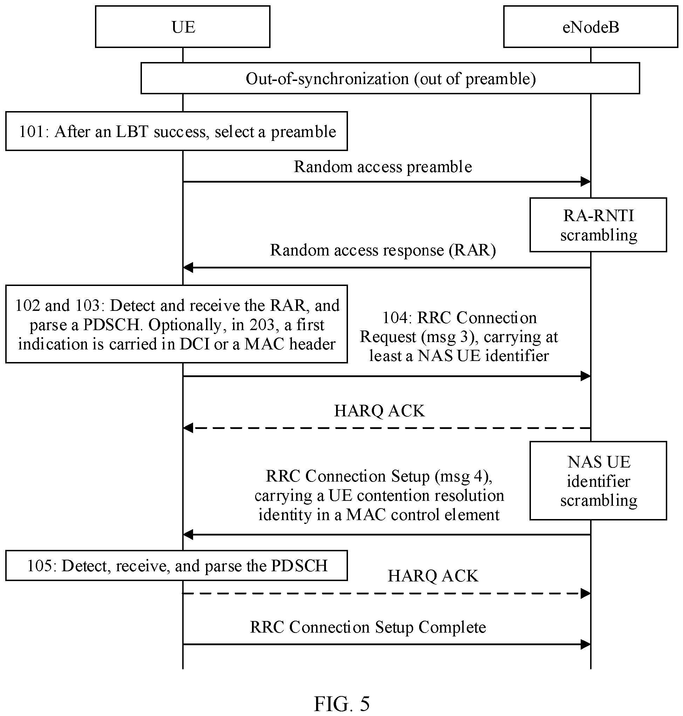

Specific implementations mainly relate to a contention-based random access procedure. An example in which NR-U UE is a terminal and a gNB is a network apparatus is used. A procedure of the NR-U UE and the gNB is shown in FIG. 5.

Step 101: After an LBT success, the NR-U UE randomly selects a preamble based on system configuration information, and selects an available random access slot; and sends the preamble in the available random access slot. The UE may obtain a RA-RNTI (random access network identifier) of the UE based on a time and a frequency domain position of the selected random access slot. A time-frequency resource used by the UE to send the preamble is referred to as a RACH occasion, RO for short. Correspondingly, the gNB receives the preamble sent by the NR-U UE.

Specifically, preferably, a manner of generating the RA-RNTI may be one of methods mentioned in the subsequent embodiments. Generally, the system configuration information includes preamble setting information, RO configuration information, a correspondence between an SSB and an RO, a value of t_id, maximum duration of a RAR window, and the like. In a general solution, an available random access slot may be all available random access slots, or in a special case, may be some specific random access slots, for example, as described in subsequent Embodiment 6.

Step 102: Specifically, the gNB obtains the same RA-RNTI by using the same method in step 101 (based on a time-frequency resource for receiving the preamble), and sends, after the LBT success, a PDCCH scrambled by using the RA-RNTI. The NR-U UE detects or attempts to receive, within a detection time range configured for the NR-U UE, the PDCCH that is sent by the gNB and that is scrambled by using the same RA-RNTI as that obtained in step 101. Specifically, the PDCCH channel mainly carries PUSCH and PDSCH channel control information (DCI). PDCCH information of different UEs is distinguished by RA-RNTI information corresponding to the different UEs, that is, CRCs of DCI of the different UEs are scrambled by using RA-RNTIs.

In an unlicensed system, sending of the PDCCH by the gNB is affected by LBT. In other words, there is a case in which the gNB prepares the PDCCH but cannot send the PDCCH because a channel is busy. To reduce impact of LBT on PDCCH sending/receiving, a maximum value of a RAR window is enlarged to be greater than 10 ms in NR-U, so that the gNB has more opportunities to send the PDCCH. However, a manner of calculating the NR RA-RNTI can only ensure that the NR RA-RNTI is unique within 10 ms. Therefore, this preferred implementation may be used to resolve a problem of how the UE correctly determines, within a RAR window longer than 10 ms, whether a PDCCH (including DCI and the like) scrambled by using the RA-RNTI and sent by the gNB is sent to the UE. Specifically, there are a plurality of cases for the detection time range configured for the NR-U UE. Refer to descriptions in subsequent Embodiment 1 to Embodiment 6. Unless otherwise specified, the detection time range refers to all RAR time windows. That is, the UE performs detection within the RAR time window until detecting a PDCCH of the UE. Specifically, the NR-U UE attempts to descramble one or more received PDCCHs by using the RA-RNTI of the NR-U UE, and a PDCCH that can be successfully descrambled is the PDCCH of the NR-U UE.

Optionally, the embodiments further include the following steps 103 to 105. However, because related steps do not involve the RA-RNTI, details are not described in this specification.

Step 103: If the PDCCH is received successfully, the UE decodes information carried in a PDSCH (Physical downlink shared channel: physical downlink shared channel). If the PDCCH is not detected within the detection time range, the NR-U UE adjusts a transmit power of the NR-U UE, and performs step 101 again in a next random access slot configured by a system.

Step 104: If the PDSCH includes time-frequency resource information for sending a Msg 3 by the NR-U UE and a temporary network identifier (TC-RNTI: Temporary Cell Radio Network temporary identification) allocated to the NR-U UE, the UE sends the Msg 3 by using a corresponding time-frequency resource, and includes, in the Msg 3, a globally unique network identifier of the NR-U UE that is used to perform random success acknowledgment in step 104.

Step 105: The NR-U UE detects the PDCCH scrambled by using the temporary network identifier of the NR-U UE in step 103. If the NR-U UE successfully detects the PDCCH, the NR-U UE decodes the information carried in the PDSCH. If the information carries the globally unique identifier sent by the NR-U UE in step 103, random access succeeds, and the NR-U UE sends an acknowledgment (ACK) to the gNB. If the information does not carry the identifier of the NR-U UE, random access fails, and step 101 is repeated.

## Embodiment 1

In this embodiment, the gNB indicates time information or position information of a RAR, to avoid misdetection that may be caused because the RA-RNTI is not unique.

201: The gNB sends a first indicator, where the first indicator is used to indicate the time information or the position information of the RAR, that is, indicate a period of time of 10 ms or a system frame to which the RAR corresponding to the NR-U UE belongs within a RAR window. The NR-U UE receives and obtains the first indicator. Generally, one system frame lasts for 10 ms.

Correspondingly, the method further includes the following steps.

202: After the NR-U UE successfully performs LBT, the UE randomly selects a preamble and an available random access slot based on system configuration information, to send the preamble. Correspondingly, the gNB receives the preamble sent by the NR-U UE. Specifically, the gNB detects the preamble sent by the NR-U UE, and after detecting the preamble, determines a RA-RNTI of the NR-U UE based on a time-frequency resource RO on which the preamble is detected.

Correspondingly, the NR-U UE may also obtain the RA-RNTI through calculation based on same RO information. For example, the gNB or the NR-U UE generates the RA-RNTI according to RA-RNTI = $1 + s\_id + 14 \times t\_id + 14 \times 80$

$\times$ f_id + 14 $\times$ 80 $\times$ 8 $\times$ ul_carrier_id (2).

s_id is used to indicate a number of a start symbol of the first subframe occupied for sending a preamble, and has a value range of 0 $\leq$ s_id <14. t_id is used to indicate a number of the first subframe occupied by a preamble transmission resource, and has a value range of 0 $\leq$ t_id < 80. f_id indicates a number of a preamble transmission resource in frequency domain, and has a value range of 0 $\leq$ f_id < 8. ul_carrier_id is used to indicate an uplink carrier used for preamble transmission, '0' indicates a normal uplink carrier, and '1' indicates a supplementary uplink carrier. Correspondingly, the gNB generates the same RA-RNTI in a same manner.

203: Detect the RAR, and determine, based on the first indicator, whether to continue to parse a PDCCH carried in the RAR. Specifically, the NR-U UE first determines whether a time window indicated by a first indicator of a detected RAR is the same as a time window for sending the preamble by the NR-U UE, for example, within same 10 ms. If a time window indicated by a first indicator of a detected RAR is the same as a time window for sending the preamble by the NR-U UE, the NR-U UE continues to parse a PDCCH carried in the RAR, to obtain information such as a PDSCH carried in the PDCCH. If a time window indicated by a first indicator of a detected RAR is not the same as a time window for sending the preamble by the NR-U UE, the NR-U UE abandons parsing the RAR, thereby greatly saving detection and parsing resources.

If the NR-U UE continues to parse the RAR and can successfully descramble a PDCCH by using the RA-RNTI of the NR-U UE, the PDCCH is a PDCCH of the NR-U UE, and the NR-U UE stops detecting the RAR.

According to the foregoing method, unnecessary detection or unnecessary parsing performed by the UE in another time can be reduced, and misdetection caused by repetition of RA-RNTIs generated in different windows that may occur in different time windows can also be avoided. In this method, a process of generating the RA-RNTI does not need to be complicated.

For subsequent steps, refer to the foregoing steps 104 and 105. Details are not described herein again.

In an example, the first indicator is carried in DCI.

Specifically, the gNB may add an additional bit to the DCI scrambled by using the RA-RNTI to indicate a period of time of 10 ms to which the RAR corresponding to the UE belongs within the RAR window, and use additional indication information to indicate a system frame in which the gNB receives the preamble. In addition, the foregoing formula (2) may be used in a process in which the gNB or the NR-U UE generates the RA-RNTI, and the RA-RNTI is still unique within 10 ms.

For example, when a maximum length of the RAR window is 20 ms, only 1 bit needs to be added to the DCI to indicate whether the gNB receives the preamble in an odd-numbered system frame or an even-numbered system frame. Alternatively, a relative time difference between sending of the DCI and receiving of the preamble by the gNB may be indicated. For example, '0' indicates that the time difference is less than 10 ms, and '1' indicates that the time difference is greater than 10 ms and less than 20 ms.

When the RAR window is longer than 20 ms, more bits may be used in the DCI to indicate time information of the RAR window. A method is similar to the foregoing method, and details are not described herein again. For example, 2 bits may indicate a receiving status of the RA-RNTI within a RAR window of a maximum of 40 ms, and 3 bits may indicate a receiving status of the RA-RNTI within a RAR window of a maximum of 80 ms.

In another example, one or more bits in the DCI may be reused, and some values are used to indicate the information about the RAR window. In this manner, some overheads can be reduced on a basis of indicating the foregoing information. For example, there are 16 reserved bits (reserved bit) in DCI 1_0 scrambled by using an existing RA-RNTI, and one or more of the reserved bits, for example, 2, 3, or 4 bits, may be used for the foregoing indication based on supported maximum RAR window duration.

In another specific example, the first indicator is carried in a RAR MAC CE.

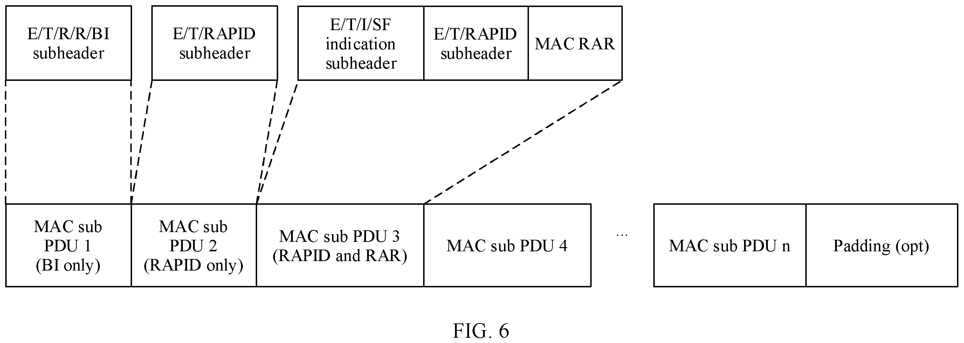

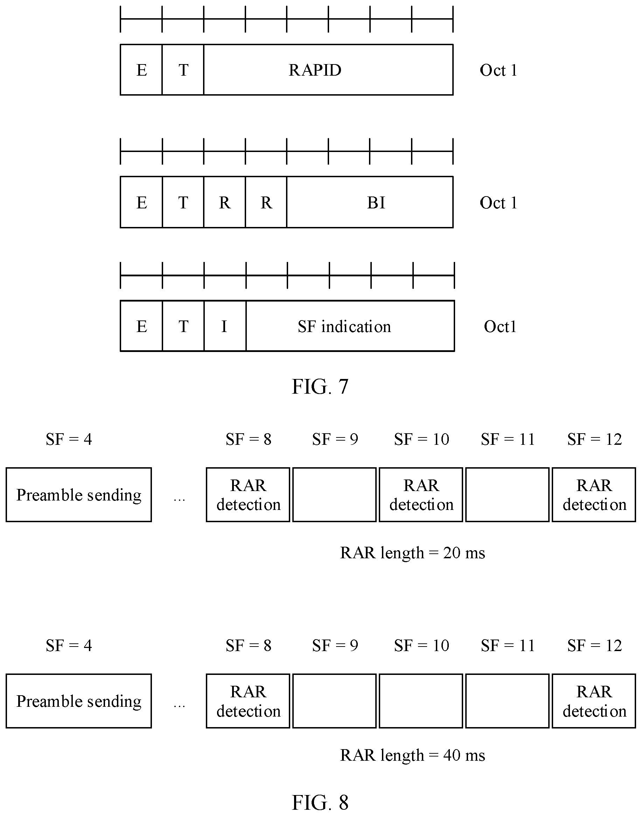

A structure of an NRU RAR MAC frame is shown in FIG. 6 and FIG. 7 below. Specifically, a RAR MAC CE (control element: control element) includes an SF indication subframe header, and the SF indication subframe header is used to indicate a system frame or a period of time of 10 ms in which a PDCCH scrambled by using a RA-RNTI corresponding to a preamble received by the gNB is located. Alternatively, simply, the SF indication subframe header is used to indicate a number of a system frame in which a PDCCH or a RAR of the UE is located.

The SF indication subframe header may be located after a BI subframe header and a RAPID subframe header. To distinguish from an existing BI subframe header and an existing RAPID subframe header, the first three bits of the SF indication subframe header may be set to '101', and the remaining 5 bits may be used to indicate a number of a system frame in which the RA-RNTI is located. The 5 bits may indicate a maximum of 32 system frames, that is, a maximum length of the RAR window is 320 ms.

On a receive side, the NRU UE receives a subsequent MAC RAR, and after detecting the SF indication subframe header, the NRU UE may determine whether the subsequent MAC RAR is of the NRU UE. Further, the gNB indicates, in a RAR MAC PDU, that received preambles may be sorted according to numbers of frames or subframes in which the preambles are located. When detecting that a system frame number or a subframe number (a system frame or a subframe corresponding to a MAC RAR) indicated by an SFI field is greater than a system frame number of a system frame or a subframe number of a subframe for sending a preamble by the UE, the UE does not attempt to detect a remaining sub PDU of the MAC PDU (physical data unit: physical data unit). In this way, energy of the UE is saved. For example, UE 1 sends a preamble in a system frame 5, and receives, in a system frame 10, a RAR (a PDCCH) scrambled by using a RA-RNTI corresponding to the UE 1. However, the SF indication subframe header indicates that a subsequent MAC RAR corresponds to RA-RNTI (a RA-RNTI obtained through calculation based on a time-frequency resource for receiving the preamble) received by the gNB in system frames 6 and 8. In this case, the UE does not continue to parse subsequent MAC information, and it is considered that the gNB does not receive the preamble sent by the UE. In the conventional technology, the NR UE blindly detects all sub PDUs of a MAC PDU indicated by DCI scrambled by using a corresponding RA-RNTI, to ensure that RAR information sent by the gNB to the NR UE is not missed.

**Embodiment 2**

Specifically, according to the text of the 3GPP 38.321 standard, when the gNB/UE generates a RA-RNTI, a value range of the RA-RNTI is 0001 to FFEF (65519).

| Value (hexa-decimal) | RNTI |
|---|---|
| 0000 | N/A |
| 0001 to FFEF | RA-RNTI, Temporary C-RNTI, C-RNTI, MCS-C-RNTI, CS-RNTI, TPC-PUCCH-RNTI, TPC-PUSCH-RNTI, TPC-SRS-RNTI, INT-RNTI, SFI-RNTI, and SP-CSI-RNTI |
| FFF0 to FFFD | Reserved |
| FFFE | P-RNTI |
| FFFF | SI-RNTI |

It can be learned from the following formula that a value range of the RA-RNTI within a window of 10 ms is 1 to 17920 (1 + 13 + 14* 13 + 14 * 80 * 7 + 14 * 80 * 8 * 1), that is, it can be ensured that the RA-RNTI is not repeated within a maximum window of 36 ms:

$$RA\text{-}RNTI = 1 + s\_id + 14 \times t\_id + 14 \times 80 \times f\_id + 14 \times 80 \times 8 \times ul\_carrier\_id$$

In an implementation, when duration of the RAR window is longer than 10 ms, a value of t_id may be directly enlarged from current 80 to 320. If a RAR window size is extended to 40 msec, a value range of t_id becomes $0 \leq t\_id < 320$ and a maximum RA-RNTI value becomes (71680-1), which is greater than that a 16-bit RNTI can provide.
However, when t_id is directly enlarged to 320 to indicate a start subframe idx of an RO within 40 ms, the following problem exists: When t_id = 240 and f id = 0, a RA-RNTI calculated according to the foregoing formula is the same as a RA-RNTI obtained when t_id = 160 and f_id = 1, a RA-RNTI obtained when t_id = 80 and f_id = 2, and a RA-RNTI obtained when t_id = 0 and f_id = 3 (it is assumed that other parameter values are the same). Consequently, a plurality of UEs that successfully send preambles on the RO within different 10 ms windows consider that the RAR scrambled by using the RA-RNTI is sent to the UEs, and send Msgs 3 on a RAR indication resource, increasing a collision probability of the Msgs 3 and reducing system access efficiency.
In a preferred implementation, an NR RA-RNTI calculation formula (3) and a corresponding parameter K are used, so that the formula (3) is more applicable to a scenario in which a RAR window is longer than 10 ms:

$$RA\text{-}RNTI = 1 + s\_id + 14 \times t\_id + 14 \times K \times f\_id + 14 \times K \times 8 \times ul\_carrier\_id \ (3)$$

In the foregoing formula, s_id indicates a number of a start symbol of the first subframe occupied for sending a preamble, and has a value range of $0 \leq s\_id < 14$. t_id indicates a number of the first subframe occupied by a preamble transmission resource, and has a value range of $0 \leq t\_id < 80$. f_id indicates a number of a preamble transmission resource in frequency domain, and has a value range of $0 \leq f\_id < 8$. ul carrier_id indicates an uplink carrier used for preamble transmission, '0' indicates a normal uplink carrier, and '1' indicates a supplementary uplink carrier. In the foregoing formula, a reason for a difference from a value in LTE is that a time-frequency resource for NR PRACH transmission may theoretically start from each symbol in each slot in each system frame of each uplink carrier, and PRACH transmission supports a maximum subcarrier spacing of 120 kHz. A value of K may vary with a maximum value of the RAR window. Refer to Table 1.

Specifically, in an example, it may be specified in a related standard that the maximum value of the RAR window is any one or more of the values in Table 1, and the value of K is a corresponding value in Table 1. Table 1 further provides a value range of an RNTI calculated according to the formula (3) in a corresponding solution.

**Table 1**

| Maximum value (ms) of a RAR window (Maximum RAR window duration) | K | RNTI range |
| --- | --- | --- |
| 20 | 160 | 1 to 35840 |
| 30 | 240 | 1 to 53760 |
| 35 | 280 | 1 to 62720 |
| 25 | 200 | 1 to 44000 |
| 15 | 120 | 1 to 26400 |

In another preferred example, the gNB may statically/semi-statically configure a RA-RNTI generation parameter K in a cell in RMSI or another common message, and UE in the cell performs calculation according to the foregoing formula (3) based on received K. In this way, when configuring a related parameter (for example, K) in the cell, the gNB may consider an available RA-RNTI, a temporary C-RNTI, a C-RNTI, and the like, and may further refer to factors such as an LBT success probability in the cell. For example, it takes an average of 22 ms for the gNB to send, for several times (for example, 100 times), DCI scrambled by using the RA-RNTI. In this case, the gNB updates K to 200, and includes updated K in a broadcast message and sends the broadcast message. For example, if it takes an average of 28 ms for the gNB to send DCI scrambled by using the RA-RNTI, the gNB updates K to 240, and includes updated K in a broadcast message and sends the broadcast message.

The method includes the following step:

301: Optionally, the gNB sends a second indicator, where the second indicator is used to indicate the value of K or indicate the maximum value of the RAR window. The NR-U UE receives the second indicator, to obtain the value of K, or obtain a value of K corresponding to the maximum value of the RAR window. Certainly, if a standard specifies a maximum value of the RAR window or a value of K, the sending process in step 301 is not required.

Correspondingly, the foregoing method further includes the following step:

302: After the LBT success, the gNB or the NR-U UE generates the RA-RNTI by using the received value of K or the received value of K corresponding to the maximum value of the RAR window and the following formula: RA-RNTI = 1 + s_id + 14 × t_id + 14 × K × f_id + 14 × K × 8 × ul_carrier_id (3).

For subsequent steps, refer to the foregoing steps 103 to 105. Details are not described herein again.

In another example, when duration of a RAR window that needs to be configured by the gNB is longer than 35 ms or a quantity of RNTIs that can be used by a communications system is less than the required value in the foregoing table, the NRU RA-RNTI may be generated with reference to another embodiment.

For example, when the RAR window is longer than 10 ms, the value of t_id is greater than 80. In this case, how the UE obtains the t_id parameter corresponding to the RO needs to be further defined:

Method 1: A fixed mapping relationship is directly provided in the standard. For example, there is a mapping relationship between a value of t_id and a number of a system frame in which an RO is located. Alternatively, a value of t_id includes a plurality of t_id segments, and each t_id segment corresponds to a number of a system frame in which an RO is located.

Example 1: A length of the RAR window is 20 ms, a value of t_id of an odd-numbered system frame ranges from 0 to 79, and a value of t_id of an even-numbered system frame ranges from 80 to 159; or a value of t_id of an odd-numbered system frame ranges from 80 to 159, and a value of t_id of an even-numbered system frame ranges from 0 to 79.

Example 2: A length of the RAR window is 30 ms, and if mod(SFN,3) = 0, the value of t_id ranges from 0 to 79; if mod(SFN,3) = 1, the value of t_id ranges from 80 to 159; or if mod(SFN,3) = 2, the value of t_id ranges from 160 to 239.

Method 2: The gNB semi-statically configures the t_id parameter based on availability of a RA-RNTI in a current cell. RA-RNTI availability mainly indicates RNTIs that are still idle in the current cell and that can be set to RA-RNTIs. The foregoing static configuration may be that a value of x may be notified to the UE by using broadcast signaling such as RMSI/OSI or RRC dedicated signaling. t_id is calculated based on x according to the following formula:

For example, the length of the RAR window is 30 ms, and

if mod(SFN-x,3) = 0, the value of t_id ranges from 0 to 79;
if mod(SFN-x,3) = 1, the value of t_id ranges from 80 to 159; or
if mod(SFN-x,3) = 2, the value of t_id ranges from 160 to 239. In the foregoing formula, x is an integer.

In brief, when the length of the RAR window is 10*y ms,
the UE may calculate the RA-RNTI of the UE according to the following formula:
mod(SFN-x,y) = t, where a value of t is 0, 1, ..., or y. t is associated with t_id. For example, if t=0, the value of t_id ranges from 0 to 79. If t=1, the value of t_id ranges from 80 to 159. The rest may be deduced by analogy.

When the RAR window is 30 ms, the value of x is 0, and the UE sends a preamble in a system frame 0, t = mod(0,3) = 0, and the value of t_id ranges from 0 to 79. When the UE sends a preamble in a system frame 1, t = mod(1,3) = 1, and the value of t_id ranges from 80 to 159. When the UE sends a preamble in a system frame 2, t = mod(2,3) = 2, and the value of t_id ranges from 160 to 239. A case in which a preamble is sent in a system frame 3 is similar to that in the system frame 0. Details are not described herein again.

When the RAR window is 30 ms, the value of x is 1, and the UE sends a preamble in a system frame 0, t = mod(0-1,3) = 2, and the value of t_id ranges from 160 to 239. When the UE sends a preamble in a system frame 1, t = mod(1-1,3) = 0, and the value of t_id ranges from 0 to 79. When the UE sends a preamble in a system frame 2, t = mod(2-1,3) = 1, and the value of t_id ranges from 80 to 159. A case in which a preamble is sent in a system frame 3 is similar to that in the system frame 0. Details are not described herein again.

## Embodiment 3

In this embodiment, an NR RA-RNTI generation formula is still used in an NR-U system. In order that different UEs detect RARs corresponding to the UEs without confusion, a search space/time-frequency resource of the UE is limited in this embodiment. Specifically, the method includes the following steps.

401: After the UE successfully performs LBT, the UE randomly selects a preamble and an available random access slot based on system configuration information, to send the preamble. The UE may generate a RA-RNTI based on a time and a frequency domain position of the selected random access slot according to the following formula: RA-RNTI = $1 + s\_id + 14 \times t\_id + 14 \times 80 \times f\_id + 14 \times 80 \times 8 \times ul\_carrier\_id$ (2).

401: The gNB obtains a same RA-RNTI through calculation by using the foregoing same method, and scrambles a PDCCH by using the RA-RNTI.

402: The UE detects/attempts to receive, only within a relatively limited time window (a RAR), the PDCCH that is sent by the gNB and that is scrambled by using the RA-RNTI. Specifically, all system frames may be grouped into N groups according to a uniform distribution rule, the UE sends a preamble in a group of system frames, and the UE performs RAR detection only in a RAR corresponding to one group of system frames, and does not need to perform RAR detection in another group of system frames. N is an integer greater than or equal to 2. Specifically, the system frames may be grouped according to mod(index,N) or mod(index-offset,N) (offset is a fixed subframe/system frame offset).

For example, after the UE sends the preamble on a PRACH transmission time-frequency resource corresponding to a subframe in an even-numbered or odd-numbered system frame, the UE uses a RA-RNTI of the UE only in the even-numbered system frame or only in the odd-numbered system frame to blindly detect a corresponding RAR. Specifically, a preamble may be sent in an even-numbered system frame, and a PDCCH is blindly detected only in each subsequent even-numbered system frame. In addition, a preamble is sent in an odd-numbered system frame, and a PDCCH is blindly detected only in each subsequent odd-numbered system frame. Alternatively, a preamble is sent in an even-numbered system frame, and a PDCCH is blindly detected only in each subsequent odd-numbered system frame. In addition, a preamble is sent in an odd-numbered system frame, and a PDCCH is blindly detected only in each subsequent even-numbered system frame.

In the foregoing embodiment, when the RA-RNTI calculation manner is not changed, a supported maximum length of the RAR window may be changed to 20 ms. As shown in the upper part of FIG. 8, the UE sends a preamble in a system frame whose frame number is 4 for initial access, and then the UE performs RAR detection only in an even-numbered system frame. Certainly, the gNB may alternatively configure the UE to perform RAR detection in an odd-numbered system frame. In the method, all the system frames are evenly grouped into two groups (an odd-numbered system frame and an even-numbered system frame). The UE sends preambles in different system frames, and performs RAR detection only in one group of system frames.

In another example, when a maximum length of a required RAR window is 40 ms, all system frames may be grouped into four groups. When a system frame number is an index, the system frames are sequentially grouped into four groups according to the following formula: mod(index,4) = 0, 1, 2 or 3, and the four groups are respectively denoted as groups 0, 1, 2 and 3. As shown in the lower part of FIG. 8, the UE sends a preamble in the group 0 (in a system frame whose frame number is 4) for initial access, and then the UE performs RAR detection only in the group 0 (system frames numbered 8, 12, ...). Certainly, the gNB may alternatively configure the UE to perform RAR detection in a system frame numbered mod(index,4) = 1, 2, or 3.

In addition, the gNB may further configure PDCCH search spaces corresponding to different system frames/subframes. After sending the preamble, the UE detects a RAR corresponding to the UE only in a specific search space configured by the gNB, to ensure that a RAR corresponding to another UE is not misdetected.

**Embodiment 4**

In this embodiment, a length of an NRU RAR window is greater than 10 ms and less than 20 ms. In addition, the NRU UE does not need to send a PRACH on a secondary uplink carrier.

In the foregoing steps 101 and 102, the NR RA-RNTI may be generated according to a formula (2a):

$$RA\text{-}RNTI = 1 + s\_id + 14 \times t\_id + 14 \times 80 \times f\_id + 14 \times 80 \times 8 \times ul\_carrier\_id \quad (2a)$$

Functions of parameters such as s_id, t_id, and f_id in the NR RA-RNTI calculation formula (2a) are the same as those in a formula (2); s_id is used to indicate a number of a start symbol of the first subframe occupied for sending a preamble, and has a value range of $0 \leq s\_id < 14$. t_id is used to indicate a number of the first subframe occupied by a preamble transmission resource, and has a value range of $0 \leq t\_id < 80$. f_id indicates a number of a preamble transmission resource in frequency domain, and has a value range of $0 \leq f\_id < 8$. However, in the NR RA-RNTI calculation formula (2a), ul_carrier_id indication information is used to indicate a period of time of 10 ms (a system frame) in which the preamble received by the gNB is located within the RAR window, that is, position information of the preamble within the RAR window. According to the foregoing formula (2a), it can be ensured that the RA-RNTI is not repeated within a RAR window of 20 ms.

Preferably, it may be specified in a standard that if the UE sends a preamble in an even-numbered system frame, a value of ul_carrier_id is 0; or if the UE sends a preamble in an odd-numbered system frame, a value of ul_carrier_id is 1; or if the UE sends a preamble in an odd-numbered system frame, a value of ul_carrier_ id is 0; or if the UE sends a preamble in an even-numbered system frame, a value of ul_carrier id is 1.

Optionally, the gNB may also notify the UE of the value of ul_carrier_id in an odd/even-numbered system frame in system information (RMSI/OSI) or RRC signaling, and the UE calculates the RA-RNTI of the UE based on indication information from the gNB.

**Embodiment 5**

Specifically, NR supports PRACH transmission with a maximum subcarrier spacing of 120 kHz. However, in this embodiment, NR-U PRACH transmission supports only a maximum subcarrier spacing of 60 kHz.

In the foregoing steps 101 and 102, the NR-U RA-RNTI may be generated according to a formula (3a) or (3b):

$$RA\text{-}RNTI = 1 + s\_id + 14 \times t\_id + 14 \times 40 \times f\_id + 14 \times 40 \times 8 \times ul\_carrier\_id \quad (3a)$$

where s_id, t_id, f_id, and ul_carrier_id in the formula (3a) are the same as those in a formula (2); s_id is used to indicate a number of a start symbol of the first subframe occupied for sending a preamble, and has a value range of $0 \leq s\_id < 14$; t_id is used to indicate a number of the first subframe occupied by a preamble transmission resource, and has a value range of $0 \leq t\_id < 80$; f_id indicates a number of a preamble transmission resource in frequency domain, and has a value range of $0 \leq f\_id < 8$; ul_carrier_id is used to indicate an uplink carrier used for preamble transmission, '0' indicates a normal uplink carrier, and '1' indicates a supplementary uplink carrier; therefore, details are not described again; in this case, it can be ensured that the NR-U RA-RNTI calculated according to the foregoing formula (3a) is not repeated within a RAR window of 20 ms; or

$$RA\text{-}RNTI = 1 + s\_id + 14 \times t\_id + 14 \times 40 \times f\_id + 14 \times 40 \times 8 \times ul\_carrier\_id \quad (3b)$$

s_id, t_id, f_id, and ul_carrier id in the formula (3a) are the same as those in a formula (2a). Therefore, details are not described again. In an implementation of the formula (3a), that is, when ul_carrier_id indication information is also used to indicate a RAR window, it can be ensured that the RA-RNTI is not repeated within a window of 40 ms.

**Embodiment 6**

Generally, a resource used for PRACH transmission may start with any symbol of any subframe in any system frame. However, in this embodiment, a position of an NRU PRACH transmission resource is limited, and this embodiment includes the following steps.

Step 601: After an LBT success, the NRU UE randomly selects a preamble based on system configuration information, and the NRU UE is allowed to send a preamble (sending of a PRACH) only in some subframes (that is, fewer than 10 subframes) in each system frame. Alternatively, the NRU UE is allowed to send a PRACH only in a subframe at a specific position in each system frame. The UE may obtain a RA-RNTI (random access network identifier) of the UE based on a time and a frequency domain position of the selected random access slot. Specifically, a manner of generating the RA-RNTI may be a manner in the conventional technology, that is, the formula (2), or may be one of the methods mentioned in the foregoing Embodiment 1 to Embodiment 5.

For example, the first column in Table 2 lists RACH configuration index numbers configured by the gNB for the UE. The second column lists preamble types. The third and fourth columns list periodic parameters of a RACH resource, where "1 0" indicates that a RACH resource is configured in a system frame with a system frame number divided by 1 being 0. In other words, the RACH resource is configured in each system frame. The fifth column in Table 1 is used to indicate subframes in which RCACH resources are configured in each system frame.

As described in Table 2, if a RACH resource whose index number is 105 is configured for the NRU UE, only some NRU UEs are allowed to send a PRACH in each subframe whose system frame number is an even number, for example, (0, 2, 4, 6, 8). The other NRU UEs may send a PRACH only in a subframe whose system frame number is an odd number, for example, (1, 3, 5, 7, 9). In this case, similarly, different value ranges of t_id may be used to indicate corresponding PRACH resource positions for different cases. For example, when a PRACH resource appears only in an even-numbered subframe and when a PRACH resource appears only in an odd-numbered subframe, numbers (as shown in Table 3) of subframes in which PRACH resources in two system frames are located are indicated. When other parameters remain unchanged, it is ensured that the generated RA-RNTI is unique within at least a window of 20 ms. In Table 3, the first column lists different values of t_id, the second column lists system frame and subframe information corresponding to the value of t_id when a PRACH sending position is not limited, and the third column lists values of t_id corresponding to PRACH resources in different system frames and subframes when a PRACH sending position is even-numbered.

Steps 602 to 605 are similar to the foregoing steps 102 to 105, and details are not described herein again.

Specifically, in steps 602 to 605, one or more of the foregoing embodiments may be combined to effectively prolong supported duration of the NRU RAR window, thereby ensuring that RA-RNTI calculation is not repeated within the prolonged RAR window, and avoiding a case in which the UE misdetects RAR information, leading to a collision of subsequent random access, and reducing an access delay and access efficiency.

**Table 2**

| 104 | A1 | 1 | 0 | 1,4,7 | 0 | 2 | 6 | 2 |
| 105 | A1 | 1 | 0 | 0,2,4,6,8 | 0 | 2 | 6 | 2 |
| 106 | A1 | 1 | 0 | 0, 1, 2, 3, 4, 5, 6, 7, 8, 9 | 0 | 2 | 6 | 2 |
| 107 | A1 | 1 | 0 | 1,3,5,7,9 | 0 | 2 | 6 | 2 |

**Table 3**

| t_id | Original subframe idx | New subframe idx |
|---|---|---|
| 0 | SF = 1, subframe = 0 (system frame 1, subframe 0) | SF = 1, subframe = 0 (system frame 1, subframe 0) |
| 1 | SF = 1, subframe = 1 | SF = 1, subframe = 2 |
| 2 | SF = 1, subframe = 2 | SF = 1, subframe = 4 |
| 3 | SF = 1, subframe = 3 | SF = 1, subframe = 6 |
| 4 | SF = 1, subframe = 4 | SF = 1, subframe = 8 |
| 5 | SF = 1, subframe = 5 | SF = 2, subframe = 0 |

In the foregoing example specific implementations, the objectives and the technical solutions of this application are further described in detail. It should be understood that the foregoing descriptions are merely specific implementations of this application, but are not used to limit the protection scope of this application. Any modification, equivalent replacement, improvement, or the like made based on the technical solutions of this application shall fall within the protection scope of this application.

All or some of the foregoing embodiments may be implemented by using software, hardware, firmware, or any combination thereof. When the embodiments are implemented by using software, all or some of the embodiments may be implemented in a form of a computer program product. The computer program product includes one or more computer instructions. When the computer program instructions are loaded and executed on a computer, the procedures or functions according to the embodiments of the present invention are completely or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

**Claims**

1. A RA-RNTI processing method, comprising:

   randomly selecting, by NR-U UE after an LBT success, a preamble preamble, and selecting an available random access time-frequency resource RO;
   sending the preamble on the selected RO; and
   generating a RA-RNTI based on the RO.

2. The method according to claim 1, wherein

   a first indicator sent by a network apparatus is received, wherein the first indicator is used to indicate time information or position information of a RAR; and
   the NR-U UE detects a PDCCH only within a time window (the RAR) indicated by the first indicator, wherein the PDCCH is scrambled by the gNB by using a same RA-RNTI.

3. The method according to claim 2, wherein the first indicator is carried in DCI.

4. The method according to claim 2, wherein the first indicator is carried in a RAR MAC CE.

5. The method according to any one of claims 1 to 4, wherein the generating a RA-RNTI based on the RO comprises: generating the RA-RNTI according to one of the following formulas:

$$RA\text{-}RNTI = 1 + s\_id + 14 \times t\_id + 14 \times K \times f\_id + 14 \times K \times 8 \times ul\_carrier\_id \ (3)$$

wherein in the foregoing formula, $s\_id$ indicates a number of a start symbol of the first subframe occupied for sending a preamble, and has a value range of $0 \leq s\_id < 14$; $t\_id$ indicates a number of the first subframe occupied by a preamble transmission resource, and has a value range of $0 \leq t\_id < 80$; $f\_id$ indicates a number of a preamble transmission resource in frequency domain, and has a value range of $0 \leq f\_id < 8$; $ul\_carrier\_id$ indicates an uplink carrier used for preamble transmission, '0' indicates a normal uplink carrier, and '1' indicates a supplementary uplink carrier; and $K$ is a parameter corresponding to a maximum value of the RAR window; or

$$RA\text{-}RNTI = 1 + s\_id + 14 \times t\_id + 14 \times 80 \times f\_id + 14 \times 80 \times 8 \times ul\_carrier\_id \ (2a)$$

wherein functions of parameters such as $s\_id$, $t\_id$, and $f\_id$ in the NR RA-RNTI calculation formula (2a) are the same as those in a formula (2); s_id is used to indicate a number of a start symbol of the first subframe occupied for sending a preamble, and has a value range of $0 \leq s\_id < 14$; t_id is used to indicate a number of the first subframe occupied by a preamble transmission resource, and has a value range of $0 \leq t\_id < 80$; f_id indicates a number of a preamble transmission resource in frequency domain, and has a value range of $0 \leq f\_id < 8$; but ul_carrier id indication information in the NR RA-RNTI calculation formula (2a) is used to indicate position information of a preamble received by the gNB within the RAR window.

**6.** The method according to claim 1 or 5, wherein
all system frames are grouped into N groups according to a uniform distribution rule, RAR detection is performed only in a RAR corresponding to one group of system frames, RAR detection does not need to be performed in another group of system frames, and N is an integer greater than or equal to 2.

**7.** The method according to claim 1 or 5, wherein
the selecting an available random access time-frequency resource RO is specifically: selecting one subframe from a plurality of subframes in a system frame configured for the NRU UE, and sending the preamble in the selected subframe, wherein a quantity of the plurality of subframes is less than 10.

**8.** A RA-RNTI processing method, comprising:

receiving, by a network apparatus, a preamble preamble sent by NR-U UE;
generating a RA-RNTI based on a random access time-frequency resource RO for receiving the preamble;
scrambling a PDCCH by using the RA-RNTI; and
sending the scrambled PDCCH after an LBT success.

**9.** The method according to claim 8, wherein the method further comprises:
sending, by the network apparatus, a first indicator, wherein the first indicator is used to indicate time information or position information of a RAR.

**10.** The method according to claim 9, wherein the first indicator is carried in DCI.

**11.** The method according to claim 9, wherein the first indicator is carried in a RAR MAC CE.

**12.** The method according to any one of claims 8 to 11, wherein the generating a RA-RNTI based on a random access time-frequency resource RO for receiving the preamble comprises: calculating the RA-RNTI according to one of the following formulas:

$$\text{RA-RNTI} = 1 + s\_id + 14 \times t\_id + 14 \times K \times f\_id + 14 \times K \times 8 \times ul\_carrier\_id \ (3)$$

wherein in the foregoing formula, s_id indicates a number of a start symbol of the first subframe occupied for sending a preamble, and has a value range of $0 \leq s\_id < 14$; t_id indicates a number of the first subframe occupied by a preamble transmission resource, and has a value range of $0 \leq t\_id < 80$; f_id indicates a number of a preamble transmission resource in frequency domain, and has a value range of $0 \leq f$ id $< 8$; ul_carrier_id indicates an uplink carrier used for preamble transmission, '0' indicates a normal uplink carrier, and '1' indicates a supplementary uplink carrier; and K is a parameter corresponding to a maximum value of the RAR window; or

$$\text{RA-RNTI} = 1 + s\_id + 14 \times t\_id + 14 \times 80 \times f\_id + 14 \times 80 \times 8 \times ul\_carrier\_id \ (2a)$$

wherein functions of parameters such as s_id, t_id, and f_id in the NR RA-RNTI calculation formula (2a) are the same as those in a formula (2); s_id is used to indicate a number of a start symbol of the first subframe occupied for sending a preamble, and has a value range of $0 \leq s\_id < 14$; t_id is used to indicate a number of the first subframe occupied by a preamble transmission resource, and has a value range of $0 \leq t\_id < 80$; f_id indicates a number of a preamble transmission resource in frequency domain, and has a value range of $0 \leq f\_id < 8$; but ul_carrier id indication information in the NR RA-RNTI calculation formula (2a) is used to indicate position information of a preamble received by the gNB within the RAR window.

**13.** A RA-RNTI processing apparatus, comprising:

a first module, configured to: after NR-U UE successfully performs LBT, randomly select a preamble preamble, and select an available random access time-frequency resource RO;
a second module, configured to send the preamble on the selected RO; and
a third module, configured to generate a RA-RNTI based on the RO.

14. The apparatus according to claim 13, further comprising:

a fourth module, configured to receive a first indicator sent by a network apparatus, wherein the first indicator is used to indicate time information or position information of a RAR; and
a fifth module, configured to detect, by the NR-U UE, a PDCCH only within a time window (the RAR) indicated by the first indicator, wherein the PDCCH is scrambled by the gNB by using a same RA-RNTI.

15. The apparatus according to claim 14, wherein the first indicator is carried in DCI.

16. The apparatus according to claim 14, wherein the first indicator is carried in a RAR MAC CE.

17. The apparatus according to any one of claims 13 to 16, wherein

in the third module, RA-RNTI = $1 + s\_id + 14 \times t\_id + 14 \times K \times f\_id + 14 \times K \times 8 \times ul\_carrier\_id$ (3)
wherein in the foregoing formula, s_id indicates a number of a start symbol of the first subframe occupied for sending a preamble, and has a value range of $0 \le s\_id < 14$; t_id indicates a number of the first subframe occupied by a preamble transmission resource, and has a value range of $0 \le t\_id < 80$; f_id indicates a number of a preamble transmission resource in frequency domain, and has a value range of $0 \le f\_id < 8$; ul_carrier_id indicates an uplink carrier used for preamble transmission, '0' indicates a normal uplink carrier, and '1' indicates a supplementary uplink carrier; and K is a parameter corresponding to a maximum value of the RAR window; or

$$RA\text{-}RNTI = 1 + s\_id + 14 \times t\_id + 14 \times 80 \times f\_id + 14 \times 80 \times 8 \times ul\_carrier\_id \quad (2a)$$

wherein functions of parameters such as s_id, t_id, and f_id in the NR RA-RNTI calculation formula (2a) are the same as those in a formula (2); s_id is used to indicate a number of a start symbol of the first subframe occupied for sending a preamble, and has a value range of $0 \le s\_id < 14$; t_id is used to indicate a number of the first subframe occupied by a preamble transmission resource, and has a value range of $0 \le t\_id < 80$; f_id indicates a number of a preamble transmission resource in frequency domain, and has a value range of $0 \le f\_id < 8$; but ul_carrier id indication information in the NR RA-RNTI calculation formula (2a) is used to indicate position information of a preamble received by the gNB within the RAR window.

18. The apparatus according to claim 13 or 17, comprising:
the fifth module, configured to: group all system frames into N groups according to a uniform distribution rule, and perform RAR detection only in a RAR corresponding to one group of system frames, wherein RAR detection does not need to be performed in another group of system frames, and N is an integer greater than or equal to 2.

19. The apparatus according to claim 13 or 17, wherein
the first module is specifically configured to: after the LBT success, select one subframe from a plurality of subframes in a system frame configured for the NRU UE, and send the preamble in the selected subframe, wherein a quantity of the plurality of subframes is less than 10.

20. A RA-RNTI processing apparatus, comprising:

a first module, configured to receive a preamble preamble sent by NR-U UE;
a second module, configured to generate a RA-RNTI based on a random access time-frequency resource RO for receiving the preamble; and
a third module, configured to: scramble a PDCCH by using the RA-RNTI; and
send the scrambled PDCCH after an LBT success.

21. The apparatus according to claim 20, wherein the apparatus further comprises:
a fourth module, configured to send a first indicator, wherein the first indicator is used to indicate time information or position information of a RAR.

**22.** The apparatus according to claim 21, wherein the first indicator is carried in DCI.

**23.** The apparatus according to claim 21, wherein the first indicator is carried in a RAR MAC CE.

**24.** The apparatus according to any one of claims 20 to 23, wherein the second module is configured to generate the RA-RNTI according to the following formula:

$$\text{RA-RNTI} = 1 + s\_id + 14 \times t\_id + 14 \times K \times f\_id + 14 \times K \times 8 \times ul\_carrier\_id \quad (3)$$

wherein in the foregoing formula, s_id indicates a number of a start symbol of the first subframe occupied for sending a preamble, and has a value range of $0 \leq s\_id < 14$; t_id indicates a number of the first subframe occupied by a preamble transmission resource, and has a value range of $0 \leq t\_id < 80$; f_id indicates a number of a preamble transmission resource in frequency domain, and has a value range of $0 \leq f\ id < 8$; ul_carrier_id indicates an uplink carrier used for preamble transmission, '0' indicates a normal uplink carrier, and '1' indicates a supplementary uplink carrier; and K is a parameter corresponding to a maximum value of the RAR window; or

$$\text{RA-RNTI} = 1 + s\_id + 14 \times t\_id + 14 \times 80 \times f\_id + 14 \times 80 \times 8 \times ul\_carrier\_id \quad (2a)$$

wherein functions of parameters such as s_id, t_id, and f_id in the NR RA-RNTI calculation formula (2a) are the same as those in a formula (2); s_id is used to indicate a number of a start symbol of the first subframe occupied for sending a preamble, and has a value range of $0 \leq s\_id < 14$; t_id is used to indicate a number of the first subframe occupied by a preamble transmission resource, and has a value range of $0 \leq t\_id < 80$; f_id indicates a number of a preamble transmission resource in frequency domain, and has a value range of $0 \leq f\_id < 8$; but ul_carrier id indication information in the NR RA-RNTI calculation formula (2a) is used to indicate position information of a preamble received by the gNB within the RAR window.

FIG. 1

FIG. 2

FIG. 3

EP 3 917 232 A1

Base station 400

Transmitter (TX) 407

Licensed spectrum

Unlicensed spectrum

Receiver (RX) 409

Licensed spectrum

Unlicensed spectrum

Coupler 411

413

Bus

Communications interface 403

Base station processor 401

Memory 405

FIG. 4

FIG. 5

| E/T/R/R/BI subheader | E/T/RAPID subheader | E/T/I/SF indication subheader | E/T/RAPID subheader | MAC RAR |
|---|---|---|---|---|

| MAC sub PDU 1 (BI only) | MAC sub PDU 2 (RAPID only) | MAC sub PDU 3 (RAPID and RAR) | MAC sub PDU 4 | ... | MAC sub PDU n | Padding (opt) |

FIG. 6

**EP 3 917 232 A1**

FIG. 7

FIG. 8

26

## INTERNATIONAL SEARCH REPORT

| International application No. |
|---|
| **PCT/CN2020/073886** |

**A. CLASSIFICATION OF SUBJECT MATTER**

H04W 72/02(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: RA-RNTI, 处理, NR, UE, LBT, 前导码, Preamble, 选择, 随机, 接入, 时频资源, RO, 发送, 生成, PDCCH, 前导序列, random, access, procedure, process+, time-frequency resource, send+, generation, sequence, select+

**C. DOCUMENTS CONSIDERED TO BE RELEVANT**

| Category* | Citation of document, with indication, where appropriate, of the relevant passages | Relevant to claim No. |
|---|---|---|
| X | CN 108668361 A (BEIJING SAMSUNG COMMUNICATION TECHNOLOGY RESEARCH INSTITUTE et al.) 16 October 2018 (2018-10-16) description, paragraphs [0002]-[0105], figures 1-12, and claims 1-19 | 1-24 |
| A | CN 108012329 A (HUAWEI TECHNOLOGIES CO., LTD.) 08 May 2018 (2018-05-08) entire document | 1-24 |
| A | CN 108289329 A (BEIJING SAMSUNG COMMUNICATION TECHNOLOGY RESEARCH INSTITUTE et al.) 17 July 2018 (2018-07-17) entire document | 1-24 |
| A | CN 101674661 A (POTEVIO INSTITUTE OF TECHNOLOGY CO., LTD.) 17 March 2010 (2010-03-17) entire document | 1-24 |
| A | US 2015023194 A1 (LG ELECTRONICS INC.) 22 January 2015 (2015-01-22) entire document | 1-24 |

☐ Further documents are listed in the continuation of Box C.  ☑ See patent family annex.

\* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed

- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 April 2020** | **22 April 2020** |

| Name and mailing address of the ISA/CN | Authorized officer |
|---|---|
| **China National Intellectual Property Administration** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/073886**

| Patent document cited in search report | | | Publication date (day/month/year) | Patent family member(s) | | | Publication date (day/month/year) |
|---|---|---|---|---|---|---|---|
| CN | 108668361 | A | 16 October 2018 | None | | | |
| CN | 108012329 | A | 08 May 2018 | CN | 109245876 | A | 18 January 2019 |
| | | | | CN | 110493870 | A | 22 November 2019 |
| | | | | WO | 2019062779 | A1 | 04 April 2019 |
| CN | 108289329 | A | 17 July 2018 | None | | | |
| CN | 101674661 | A | 17 March 2010 | None | | | |
| US | 2015023194 | A1 | 22 January 2015 | WO | 2013105810 | A1 | 18 July 2013 |
| | | | | KR | 20140121391 | A | 15 October 2014 |
| | | | | JP | 2015508609 | A | 19 March 2015 |
| | | | | CN | 104041131 | A | 10 September 2014 |
| | | | | EP | 2804425 | A1 | 19 November 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910069184X